(19) Europäisches Patentamt
European Patent Office
Office européen des brevets

(11) **EP 2 612 015 B1**

(12) **EUROPEAN PATENT SPECIFICATION**

(45) Date of publication and mention
of the grant of the patent:
**24.01.2018 Bulletin 2018/04**

(51) Int Cl.:
*F02D 41/12* (2006.01)    *F02D 9/08* (2006.01)
*F02D 31/00* (2006.01)    *F02D 41/00* (2006.01)
*F02M 35/10* (2006.01)    *F02D 41/02* (2006.01)

(21) Application number: **11823843.5**

(22) Date of filing: **31.08.2011**

(86) International application number:
**PCT/SE2011/051041**

(87) International publication number:
**WO 2012/033441 (15.03.2012 Gazette 2012/11)**

(54) **METHOD FOR CONTROL OF A DAMPER FOR REGULATING A FLOW IN A PIPE CONNECTED TO AN ENGINE**

VERFAHREN ZUR STEUERUNG EINES DÄMPFERS ZUM REGELN EINER STRÖMUNG IN EINER AN EINEN MOTOR ANGESCHLOSSENEN RÖHRE

PROCÉDÉ DE COMMANDE D'UN REGISTRE PERMETTANT DE RÉGULER UN FLUX DANS UN TUYAU RACCORDÉ À UN MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 SE 1050885**

(43) Date of publication of application:
**10.07.2013 Bulletin 2013/28**

(73) Proprietor: **Scania CV AB**
**151 87 Södertälje (SE)**

(72) Inventors:
• **JUHLIN-DANNFELT, Peter**
**S-126 36 Hägersten (SE)**
• **LARSSON, Anders**
**S-146 49 Tullinge (SE)**

(74) Representative: **Scania CV AB**
**Patents, GP 117kv**
**151 87 Södertälje (SE)**

(56) References cited:
EP-A2- 0 206 790      EP-A2- 1 043 487
EP-A2- 1 132 586      WO-A1-2006/107118
JP-A- 2004 183 513    US-A- 2 269 204
US-A- 4 237 842       US-A- 4 640 243
US-A- 4 727 838       US-A- 4 777 918
US-A- 5 967 862       US-A1- 2007 202 990
US-B1- 6 216 676

EP 2 612 015 B1

## Description

## Technical field

The present invention relates to a method for control of a damper. The invention relates in particular to a method according to the preamble of claim 1. The invention further relates to a damper, a system and a motor vehicle.

## Background to the invention

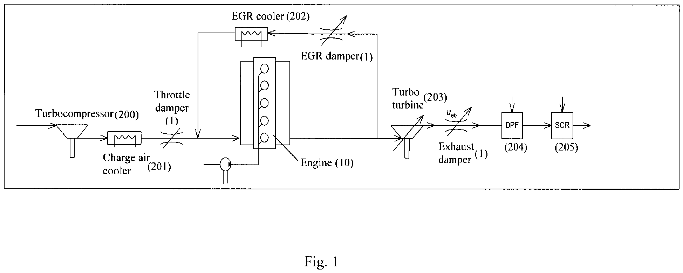

Figure 1 depicts schematically a gas flow in an engine system which in this example comprises a diesel engine 10 with a turbo and a number of pipes connected to the engine 10. Air is drawn in from the left in Figure 1 through an inlet pipe, is compressed in a turbocompressor 200 and is cooled in a charge air cooler 201 before passing a throttle damper 1 which regulates the amount of air entering the diesel engine. After the throttle damper, the air is mixed with recycled exhaust gases, so-called exhaust gas recirculation (EGR), and the resulting mixture is then drawn into the engine's cylinders to be mixed therein with diesel fuel before combustion takes place in the engine.

The exhaust gases from the combustion process then pass through a turbo turbine 203 which drives the turbocompressor 200. However, some of the exhaust gases enter an EGR pipe and are led back to the inlet pipe via an EGR damper 1 and an EGR cooler. The function of the EGR damper is to regulate the amount of exhaust gases recycled to the combustion process.

Before they finally leave the engine system, the exhaust gases pass an exhaust damper 1 which controls the pressure in an exhaust manifold (not depicted in the diagram). The exhaust gases then pass through a post-treatment system which may comprise a particle filter 204 (DPF, diesel particle filter) and a so-called SCR (selective catalytic reduction) catalyst 205.

The SCR catalyst 205 of a motor vehicle with a diesel engine operates only when the temperature of the exhaust gases is high enough, typically over 200°C. If the engine 10 is not under heavy load, the exhaust gases will be at a lower temperature than desired and will therefore cool the catalyst. One way of limiting the amount of cooling exhaust gases is to use a damper 1 situated in an air inlet pipe to the engine. The amount of air entering the engine may thus be limited, leading to the exhaust gases from the engine also being limited. This damper is usually referred to as a throttle damper, as mentioned above.

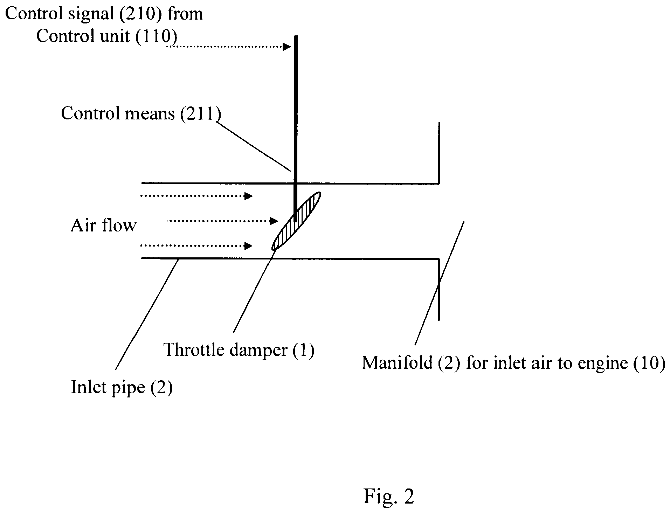

Figure 2 depicts schematically such an arrangement whereby a throttle damper 1 is provided in an inlet pipe 2 to regulate the gas flow (air flow) through the pipe, which is connected to an engine 10 via an inlet air manifold 2. The throttle damper 1 is controlled by a control unit 110 using one or more control means 211 to regulate the flow through the inlet pipe according to desired amounts of air supply to the engine system. When the amount of air entering the engine is limited by means of a throttle damper, the pressure in the inlet pipe will drop, with consequent risk of motor oil being drawn into the inlet pipe, e.g. through the valve seals. The pressure in the inlet pipe at which this might occur depends inter alia on the configuration of the valve seals.

The amount of air which the engine 10 consumes is largely determined by its speed, which in this case means that the higher the engine's speed the greater the air flow it requires. If the throttle damper 1 limits the amount of air reaching the engine and the engine speed rises, it has to be opened to allow a greater air flow to reach the engine. If this is not done, the negative pressure after the throttle damper (in the direction of flow) in the inlet pipe 2 will increase. For example, when the clutch closes on the occasion of a gear downshift, the speed of the engine will increase greatly because the speed of the gearbox input shaft is greater than that of the engine's flywheel. If in such a situation the throttle damper assumes a position which results in a small air flow through the inlet pipe, this leads to the pressure in the pipe becoming low, with the possible consequence of motor oil being drawn in, e.g. through the valve seals. This is undesirable in that motor oil in the inlet pipe will burn and give rise to unwanted exhaust gases and will in the worst case cause the engine to continue to run even if the fuel system has ceased to inject diesel fuel into it. Moreover, the engine's oil consumption will increase, leading to its having to be serviced significantly more often than is usually the case.

More generally, certain general problems arise from a large and rapid change in speed of an engine. A large increase in engine speed causes an obvious risk of too little air being supplied for its combustion, leading for example to increased discharge of hazardous particles.

Conversely, a rapid decrease in engine speed entails risk of too much air being supplied to the combustion, leading to a so-called cooling effect such that the exhaust gases from the combustion will be at a lower temperature than that desired for optimum functioning of the catalyst. This latter case causes increased discharges arising from combustion in engine systems with catalysts.

EP 0 206 790 A2, US 4 640 243 A, JP 2004 183513 A and EP 1 043 487 A2 are examples of prior art that is related to the control of the throttle valve as function of the engine speed, respectively acceleration.

## Brief description of the invention

An object of the present invention is to propose a method and a damper which wholly or partly solve the problems of prior art methods and dampers. In particular, the invention relates to solving the problems which arise in connection with a rapid and large change in the speed of an engine. Another object of the invention is to propose an alternative method and an alternative damper for regulating a flow in a pipe.

According to an aspect of the invention, the above objects are achieved with a method according to claim 1.

Various embodiments of the above method are defined in the dependent claims pertaining to claim 1.

The method according to the invention may also be implemented in a computer programme which, when executed in a computer, causes the computer to apply the method.

According to the invention, the above objects are achieved with a damper for regulating a flow in a pipe connected to an engine, which damper is adapted to assuming a plurality of different positions in the pipe, thereby regulating a fluid flow through the pipe, and is controlled on the basis of a first parameter $P1$ in the form of change per unit time in a speed $\omega$ of the engine.

The invention further relates to a system comprising at least one damper according to the invention and at least one control unit which is adapted to controlling the damper and to doing so on the basis of a first parameter $P1$ in the form of change per unit time in a speed $\omega$ of the engine.

The damper and/or the system above may form part of a motor vehicle but may also form part of an engine system suited to marine or industrial use.

A solution according to the present invention makes it possible to achieve controlled regulation of a flow in a pipe because the control of the damper is improved. It is therefore possible, for example, for emissions from engines to be kept at low levels. Other advantages include more effective use of catalysts and better utilisation of fuel.

There is also avoidance of the risk of unwanted low pressure occurring in a pipe in which a damper is provided to regulate a flow therein.

Further advantages and applications of the invention are indicated by the detailed description set out below.

**Brief description of drawings**

The present invention is described below with reference to the attached drawings, in which:

- Figure 1 depicts schematically a gas flow in an engine system;
- Figure 2 depicts schematically a throttle damper situated in an inlet pipe connected to an engine via a manifold;
- Figure 3 depicts schematically a power train of a motor vehicle, and a control unit adapted to controlling an engine in the power train;
- Figure 4 is a flowchart for an embodiment of the invention; and
- Figure 5 depicts schematically a control unit for controlling a damper.

**Detailed description of the invention**

As discussed above, certain problems may arise from any large and rapid change in the engine speed $\omega$. The inventors have learned in their inventive work that it is important to detect a large change per unit time in a speed $\omega$ of an engine 10 in order to avoid such problems. Accordingly, the invention relates to a method for control of a damper 1 on the basis of a first parameter $P1$ which represents a change per unit time in a speed $\omega$ of an engine. The damper is provided in a pipe 2 connected to the engine to regulate a fluid flow in the pipe.

A large and rapid change in the engine speed $\omega$ may be detected by examining the pattern of change in the speed $\omega$ per unit time. This information may be used to control the damper in a controlled and more precise way so that, for example, the supply of air to the combustion in the engine 10 is more appropriate to prevailing/current engine speed $\omega$ than is possible with prior art solutions. Obvious advantages are reduced discharge of hazardous particles, more effective use of catalysts, better utilisation of fuel through improved combustion in the engine, and avoidance of unwanted negative pressure in the pipe.

The invention also proposes a solution which indicates whether the change will be a decrease or increase in engine speed (i.e. by examining the arithmetical sign of the change per unit time in the engine speed $\omega$), thereby facilitating the control of the damper.

As discussed above, too low a pressure may occur in an inlet pipe 2 for an engine 10 in which a throttle damper 1 is provided to regulate a gas flow. The pressure in the inlet pipe depends inter alia on a speed $\omega$ of the engine, on the charge pressure after any turbo fitted, on the temperature in the inlet pipe, and on which position the throttle damper assumes in the inlet pipe, thereby affecting the flow through the pipe. It is important to quickly detect a large change per unit time in a speed $\omega$ of an engine in order to open the throttle damper at a similar rate to the rate of increase in the engine speed $\omega$ and thereby avoid the occurrence of too low a pressure in the inlet pipe.

Throttle dampers 1 and other types of dampers are usually controlled by one or more control means 211 (see figure 2) which are operated pneumatically or by any electric motors possibly provided in heavy motor vehicles, e.g. trucks, buses and site vehicles.

Throttle dampers are usually adapted to assuming a plurality of intermediate positions between a first extreme state and a second extreme state, depending inter alia on a current speed $\omega$ of the engine, desired engine torque, etc. The first extreme state is a fully open position resulting in a maximum gas flow in the inlet pipe, and the second extreme state is a fully closed position resulting in a minimum gas flow in the inlet pipe. Figure 2 shows the throttle damper in an intermediate position between fully open and fully closed.

Moreover, most throttle dampers are adapted to assuming different positions in the inlet pipe at varying rates of movement v, since their position has to correspond to a current engine speed $\omega$ for the flow of air through the engine to be appropriate to the desired combustion in the cylinders. The damper is therefore controlled on the basis of a second parameter $P2$ which represents the current speed $\omega$ of the engine. The actual control of the control means is most commonly exercised by a control unit 110, usually in the form of a so-called ECU (electrical control unit) adapted to controlling various functions in a motor vehicle.

The type of prior art control described above has a certain initial delay and a limited maximum rate at which the throttle damper can be caused to reach the various positions in the inlet pipe, which means that the control most commonly fails to keep up with a large increase in engine speed, e.g. when the clutch 40 closes on the occasion of a gear downshift. This leads to too low a pressure in the inlet pipe, with the consequent possibility of motor oil being drawn into the inlet pipe, e.g. through valve seals.

To avoid such a situation, the throttle damper has to be turned to a position in the inlet pipe such that too low a pressure does not occur in the pipe if there is risk of a rapid increase in engine speed. This means according to the invention that the throttle damper is turned towards a more open position in the inlet pipe so that the air flow through it increases on the basis of the change per unit time in the speed $\omega$ of an engine. The present invention therefore means, according to an embodiment, that the throttle damper has to be adapted to being controlled on the basis of a first parameter $P1$ (change per unit time in a speed $\omega$ of the engine to which the inlet pipe is connected). According to another embodiment, the throttle damper is controlled on the basis of the first parameter $P1$ and the second parameter $P2$, both of which therefore serve as input parameters to the damper's control logic.

According to another preferred embodiment of the invention, the change in the speed $\omega$ is a measured or calculated time derivative $\dfrac{d\omega}{dt}$ of the speed of the engine according to known methods.

There is checking of whether the change per unit time in the engine speed $\omega$ exceeds a limit value T or not. If the change per unit time in the engine's current speed $\omega$ exceeds said limit value T, the damper is turned (immediately) to a fully open position at a maximum rate $v_{Max}$, equalising the pressure before and after the damper (in the direction of flow) in the inlet pipe and consequently avoiding too low a pressure in the pipe. Maximum rate $v_{Max}$ in this context means the fastest rate at which a damper can reach its various positions in a pipe, which is different for different types of the damper, depending on their configuration.

The aforesaid limit value T for the change per unit time in the engine speed $\omega$ has preferably to be within the range 100-1000 revolutions/minute/second for a throttle damper in an inlet pipe in heavy motor vehicles (e.g. trucks and buses) to achieve desired results, i.e. preventing motor oil from moving in the wrong direction, e.g. through the valve seals.

It has also been found that control of a damper may also be based on a fourth parameter $P4$ which represents a change per unit time in the first parameter $P1$, i.e. the second derivative or second moment of the engine speed $\omega$, viz. $\dfrac{d^2\omega}{dt^2}$. This fourth parameter $P4$ contains information about how the engine speed $\omega$ will change, which can be used to predict any rapid change in it.

The invention further relates to a damper 1 for regulating a flow in a pipe 2, which damper is adapted to being controlled on the basis of a change per unit time in a speed $\omega$ of an engine 10.

The present invention relates also to a system comprising at least one damper 1 according to the invention and at least one control unit 110 which is adapted to controlling the damper on the basis of a change per unit time in a speed $\omega$ of an engine 10.

Such a system as above may preferably be provided in a motor vehicle or form part of an engine system which comprises an engine 10. The engine system may be suited to marine or industrial use (e.g. electricity standby units), as specialists in the field will appreciate.

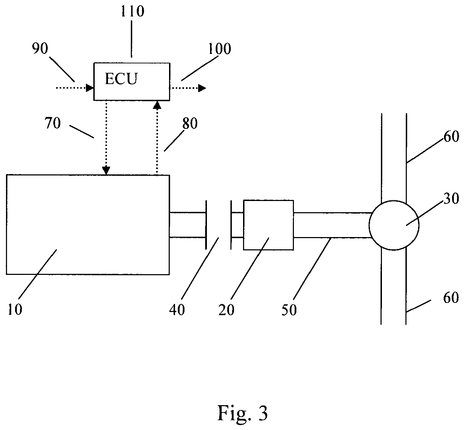

Figure 3 depicts schematically parts of a power train of a motor vehicle, e.g. a car or a heavy vehicle such as a truck or bus. The power train comprises an engine 10 connected mechanically by a shaft to a first end of the gearbox 20 via a clutch device 40. The second end of the gearbox 20 is connected mechanically by a universal shaft 50 to a differential gear 30 associated with a rear axle. The rear axle itself comprises respective left and right driveshafts 60 for the vehicle's powered wheels (not depicted in the diagram). Also depicted is a control unit 110 (ECU) adapted to controlling the engine's functions in Figure 3, e.g. via a control line 70 and a feedback line 80.

According to the invention, the damper 1 is controlled on the basis of the change per unit time in the speed $\omega$ of the engine 10 when the clutch 40 is activated. The damper is therefore controlled also on the basis of a third parameter $P3$ which indicates whether the clutch is activated or not. The clutch being activated means that it is not in its closed position. If the clutch is for example activated by a foot pedal, its activation means that the foot pedal is fully or partly depressed. This condition may with advantage be used in that an activated clutch indicates a potential gear downshift which might lead to a rapid increase in the engine speed $\omega$. The risk of unwanted pressure in the pipe 2 is thus further limited by this condition pertaining to the clutch. It should be noted that a large change in engine speed might be due to other causes than a downshift such as described above.

According to the invention, *only* when the clutch 40 is activated is the damper 1 controlled on the basis of the change per unit time in the speed $\omega$ of the engine 10. An advantage of this embodiment is that it reduces the risk of the damper being opened unnecessarily. This might occur because the value of a calculated or measured change per unit time in the engine speed $\omega$ (e.g. the time derivative) is subject to some uncertainty, so the calculated or measured value might be above the limit value $T$ despite the actual change per unit time in the engine speed $\omega$ being in reality below the limit value $T$. Unnecessary opening of a throttle damper means for example that the catalyst 205 undergoes cooling, with consequently inferior cleaning of the exhaust gases. To compensate for such cooling, the catalyst will need warming, which means extra fuel consumption.

According to another embodiment, the damper is also controlled on the basis of some further parameter other than those previously mentioned ($P1$, $P2$, $P3$, $P4$), such as changes in torque demanded (e.g. by a cruise control) or changes in accelerator pedal position. A large and rapid change in torque demanded indicates that a large and rapid change in the engine speed $\omega$ is to be expected. The same also applies to a change in accelerator position, since a large and rapid change in this likewise indicates that a large and rapid change in the engine speed $\omega$ is to be expected. In either case the damper needs controlling to compensate for the respective change. Other parameters that indicate that a large and rapid change in the engine speed $\omega$ is to be expected may also be used for controlling the damper 1.

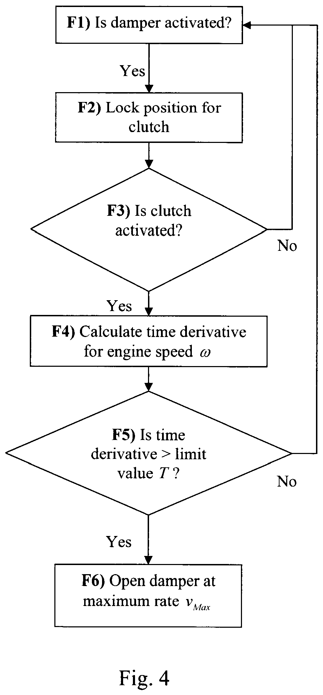

Figure 4 is a flowchart for an embodiment of the present invention. Step F1 checks whether the throttle damper 1 is activated and is limiting the air supply to the engine 10, in which case step F2 locks the position of the clutch 40.

Step F3 then checks whether the clutch is activated in order thereby to find out whether there is risk of the engine speed $\omega$ having, during sliding together of the clutch, a time derivative for the engine speed $\omega$ which leads to the engine system being forced to open the throttle damper at maximum rate to ensure that the engine will not receive too little air. If the clutch is not activated at step F3, the method goes back to step F1, but if the clutch is activated, then step F4 calculates the time derivative of the engine speed $\omega$, and step F5 uses this calculation as a basis for checking whether the time derivative exceeds a limit value $T$ or not. If the time derivative exceeds the limit value $T$ at step F5, this indicates that there risk of the engine system receiving too little air unless the throttle damper is opened at a maximum rate $v_{Max}$. If such is the case, then step F6 opens the throttle damper (immediately) at the maximum rate $v_{Max}$ to avoid shortage of air supply to the engine. If conversely the time derivative does not exceed the limit value $T$ at step F5, the method goes back to step F1.

Said limit value $T$ for the time derivative is set such that the engine system at maximum rate $v_{Max}$ can open the throttle damper without causing air shortage, see above for examples of values of the limit value T.

In the foregoing description the invention was discussed with reference to throttle dampers 1 situated in inlet pipes 2 to an engine 10. It should however be noted that the invention is not restricted to throttle dampers 1 and inlet pipes 2, since specialists will appreciate that the throttle damper 1 may be of the kind used in an exhaust pipe or EGR pipe to regulate a flow in them or in any other suitable pipe 2.

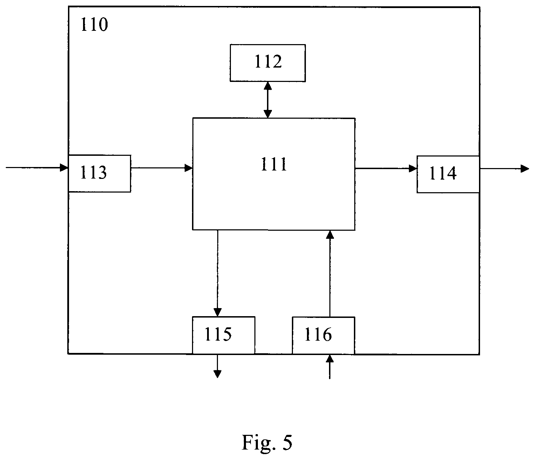

Regarding the control unit 110, such a unit is schematically depicted in Figure 5. The control unit 110 comprises a calculation unit 111 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 111 is connected to a memory unit 112 which is situated in the control unit 110 and which provides the calculation unit 111 with, for example, the stored programme code and/or the stored data which the calculation unit 111 needs for it to be able to perform calculations. The calculation unit 111 is also arranged to store partial or final results of calculations in the memory unit 112.

The control unit 110 is further provided with respective devices 113, 114, 115, 116 for receiving and sending input and output signals. These input and output signals may comprise waveforms, pulses or other attributes which the input signal receiving devices 113, 116 can detect as information and which can be converted to signals which the calculation unit 111 can process. These signals are thereafter conveyed to the calculation unit 111. The output signal sending devices 114, 115 are arranged to convert signals received from the calculation unit 111 in order, e.g. by modulating them, to create output signals which can be conveyed to other parts of the system for determination of downshift and upshift points. Specialists will appreciate that the aforesaid computer may take the form of a calculation unit 111 and that the aforesaid memory may take the form of the memory unit 112.

Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection. The connections 70, 80, 90, 100 in Figure 1 may take the form of one or more of these cables, buses or wireless connections.

As specialists will appreciate, a method for control of a damper according to the present invention may also be implemented in a computer programme which, when executed in a computer, causes the computer to apply the method. The computer programme is contained in a computer programme product's computer-readable medium which takes the form of a suitable memory, e.g. ROM (read-only memory), PROM (programmable read-only memory), EPROM (erasable PROM), flash memory, EEPROM (electrically erasable PROM), a hard disc unit etc

Finally, it should be noted that the present invention is not restricted to the embodiments described above of the invention but relates to and comprises all embodiments within the protective scope of the attached independent claims.

**Claims**

1. A method for control of a throttle damper for regulating an air flow in a pipe (2) connected to an engine (10), which throttle damper (1) is adapted to assuming a plurality of different positions in the pipe (2), thereby regulating an air flow through the pipe, wherein the engine (10) is also connected to a clutch (40), **characterised in that** the throttle damper (1) is controlled on the basis of a third parameter *P3* which indicates whether the clutch (40) is activated or not, whereby only if the third parameter *P3* indicates that the clutch (40) is activated and not in its closed position, the throttle damper (1) is controlled on the basis of a first parameter *P1* which represents a change per unit time in a speed $\omega$ of the engine (10), wherein the throttle damper (1) is adapted to assuming a plurality of positions between a first extreme state and a second extreme state, such that

   - the first extreme state is a fully open position resulting in a maximum air flow in the pipe (2), and
   - the second extreme state is a fully closed position resulting in a minimum air flow in the pipe (2), wherein the throttle damper (1) is caused to turn to the first extreme state at a maximum rate of movement $v_{Max}$ if the first parameter *P1* assumes a value greater than the limit value T, which maximum rate $v_{Max}$ is a highest rate at which throttle damper (1) can reach said plurality of positions.

2. A method according to claim 1, whereby the air flow is a gas flow and the pipe (2) is either an air inlet pipe or an exhaust pipe or an EGR pipe for the engine (10).

3. A method according to claim 2, whereby the engine (10) is a diesel engine (10).

4. A method according to any one of the foregoing claims, whereby the throttle damper (1) is further controlled on the basis of a second parameter *P2* which is a current speed $\omega$ of the engine (10).

5. A method according to any one of the foregoing claims, whereby the throttle damper (1) is further controlled on the basis of a fourth parameter *P4* which is a change per unit time in the first parameter *P1*.

6. A method according to any one of the foregoing claims, whereby the throttle damper (1) is further controlled on the basis of some further parameter *Pn* such as change in torque demanded or change in position of an accelerator pedal.

7. A method according to any one of the foregoing claims , whereby the limit value *T* is within the range

$$(100\text{-}1000)\frac{2\pi}{60}rad/s^2 .$$

8. A method according to any one of the foregoing claims, whereby the throttle damper (1) is adapted to reach said plurality of positions at a varying rate of movement *v*.

9. A computer programme which comprises programme code and which, when said programme code is executed in a computer, causes said computer to apply the method according to any of claims 1-8.

10. A computer programme product comprising a computer-readable medium which contains a computer programme according to claim 9.

11. A system comprising at least one throttle damper (1) for regulating a flow in a pipe (2) connected to an engine (10), which throttle damper is adapted to assuming a plurality of different positions in the pipe (2), thereby regulating an air flow through the pipe, wherein the engine (10) is also connected to a clutch (40), and at least one control unit (110) which is adapted to control the throttle damper (1), **characterised in that** the system is adapted to control the throttle damper (1) on the basis of a third parameter *P3* which indicates whether the clutch (40) is activated or not, whereby only if the third parameter *P3* indicates that the clutch (40) is activated and not in its closed position, the system is adapted to control the throttle damper (1) on the basis of a first parameter *P1* which is a change per unit time in a speed $\omega$ of the engine (10), wherein the throttle damper (1) is adapted to assuming a plurality of positions between a first extreme state and a second extreme state, such that

   - the first extreme state is a fully open position resulting in a maximum air flow in the pipe (2), and
   - the second extreme state is a fully closed position resulting in a minimum air flow in the pipe (2), wherein the throttle damper (1) is caused to turn to the first extreme state at a maximum rate of movement $v_{Max}$ if the first parameter $P1$ assumes a value greater than the limit value T, which maximum rate $v_{Max}$ is a highest rate at which throttle damper (1) can reach said plurality of positions.

12. A motor vehicle, e.g. car, truck or bus, provided with at least one system according to claim 11.

**Patentansprüche**

1. Verfahren zum Steuern einer Drosselklappe zum Regeln des Luftdurchsatzes in einem mit einem Verbrennungsmotor (10) verbundenen Rohr (2), wobei die Drosselklappe (1) so eingerichtet ist, dass sie eine Mehrzahl unterschiedlicher Positionen im Rohr (2) annimmt, wodurch sie den Luftdurchsatz durch das Rohr regelt, wobei der Verbrennungsmotor (10) außerdem mit einer Kupplung (40) verbunden ist, **dadurch gekennzeichnet, dass** die Drosselklappe (1) auf Basis eines dritten Parameters $P3$ gesteuert wird, der angibt, ob die Kupplung (40) aktiviert ist oder nicht, wobei nur dann, wenn der dritte Parameter $P3$ angibt, dass die Kupplung (40) aktiviert und nicht in der geschlossenen Position ist, die Drosselklappe (1) auf Basis eines ersten Parameters $P1$ gesteuert wird, der eine Änderung pro Zeiteinheit einer Drehzahl $\omega$ des Verbrennungsmotors (10) repräsentiert, wobei die Drosselklappe (1) dazu eingerichtet ist, eine Mehrzahl Positionen zwischen einem ersten Extremzustand und einem zweiten Extremzustand einzunehmen, so dass

- der erste Extremzustand eine vollständig geöffnete Position ist, die in einem maximalen Luftdurchsatz durch das Rohr (2) resultiert, und
- der zweite Extremzustand eine vollständig geschlossene Position ist, die in einem minimalen Luftdurchsatz durch das Rohr (2) resultiert, wobei die Drosselklappe (1) sich mit einer maximalen Bewegungsgeschwindigkeit $v_{Max}$ dreht, wenn der erste Parameter $P1$ einen Wert größer als der Grenzwert T annimmt, wobei die maximale Geschwindigkeit $v_{Max}$ die höchste Geschwindigkeit ist, mit der die Drosselklappe (1) die Mehrzahl Positionen erreichen kann.

2. Verfahren nach Anspruch 1, wobei der Luftdurchsatz ein Gasdurchsatz ist und das Rohr (2) entweder eine Einlassleitung oder ein Auspuffrohr oder eine EGR-Leitung für den Verbrennungsmotor (10) ist.

3. Verfahren nach Anspruch 2, wobei der Verbrennungsmotor (10) ein Dieselmotor (10) ist.

4. Verfahren nach einem der vorigen Ansprüche, wobei die Drosselklappe (1) ferner auf Basis eines zweiten Parameter $P2$ gesteuert wird, der die aktuelle Drehzahl $\omega$ des Verbrennungsmotors (10) ist.

5. Verfahren nach einem der vorigen Ansprüche, wobei die Drosselklappe (1) ferner auf Basis eines vierten Parameters $P4$ gesteuert wird, der eine Änderung pro Zeiteinheit des ersten Parameters $P1$ ist.

6. Verfahren nach einem der vorigen Ansprüche, wobei die Drosselklappe (1) ferner auf Basis einiger weiterer Parameter $Pn$ gesteuert wird, wie etwa einer Änderung der Drehmomentanforderung oder einer Änderung der Position des Gaspedals.

7. Verfahren nach einem der vorigen Ansprüche, wobei der Grenzwert T im Bereich von

$$(100 - 1000)\frac{2\pi}{60}rad/s^2 \text{ liegt.}$$

8. Verfahren nach einem der vorigen Ansprüche, wobei die Drosselklappe (1) dazu eingerichtet ist, die Mehrzahl Positionen mit einer variierenden Bewegungsgeschwindigkeit $v$ zu erreichen.

9. Computerprogramm, das einen Programmcode aufweist, und das bei Ausführung des Programmcodes auf einem Computer den Computer veranlasst, das Verfahren nach einem der Ansprüche 1 bis 8 auszuführen.

10. Computerprogrammprodukt mit einem computerlesbaren Medium, das ein Computerprogramm nach Anspruch 9 aufweist.

11. System, das mindestens eine Drosselklappe (1) zum Regeln des Luftdurchsatzes in einem mit einem Verbrennungsmotor (10) verbundenen Rohr (2) aufweist, wobei die Drosselklappe (1) so eingerichtet ist, dass sie eine Mehrzahl unterschiedlicher Positionen im Rohr (2) annimmt, wodurch sie den Luftdurchsatz durch das Rohr regelt, wobei der Verbrennungsmotor (10) außerdem mit einer Kupplung (40) verbunden ist, und mindestens eine Steuereinheit (110), die zum Steuern der Drosselklappe (1) eingerichtet ist, **dadurch gekennzeichnet, dass** das System zum Steuern der Drosselklappe (1) auf Basis eines dritten Parameters $P3$ eingerichtet ist, der angibt, ob die Kupplung (40) aktiviert ist oder nicht, wobei nur dann, wenn der dritte Parameter $P3$ angibt, dass die Kupplung (40) aktiviert und nicht in der geschlossenen Position ist, das System die Drosselklappe (1) auf Basis eines ersten Parameters $P1$ steuert, der eine Änderung pro Zeiteinheit einer Drehzahl $\omega$ des Verbrennungsmotors (10) ist, wobei die Drosselklappe (1) dazu eingerichtet ist, eine Mehrzahl Positionen zwischen einem ersten Extremzustand und einem zweiten Extremzustand einzunehmen, so dass

- der erste Extremzustand eine vollständig geöffnete Position ist, die in einem maximalen Luftdurchsatz durch das Rohr (2) resultiert, und
- der zweite Extremzustand eine vollständig geschlossene Position ist, die in einem minimalen Luftdurchsatz durch das Rohr (2) resultiert, wobei die Drosselklappe (1) sich mit einer maximalen Bewegungsgeschwindigkeit $v_{Max}$ dreht, wenn der erste Parameter $P1$ einen Wert größer als der Grenzwert Tannimmt, wobei die maximale Geschwindigkeit $v_{Max}$ die höchste Geschwindigkeit ist, mit der die Drosselklappe (1) die Mehrzahl Positionen erreichen kann.

12. Kraftfahrzeug, z. B. ein Personenkraftwagen, ein Lastkraftwagen oder ein Bus, das mit mindestens einem System nach Anspruch 11 ausgerüstet ist.

**Revendications**

1. Procédé de commande d'un clapet d'étranglement pour réguler un flux d'air dans un tuyau (2) relié à un moteur (10), lequel clapet d'étranglement (1) est adapté pour adopter une pluralité de positions différentes dans le tuyau (2), régulant ainsi un flux d'air à travers le tuyau, dans lequel le moteur (10) est également relié à un embrayage (40), **caractérisé en ce que** le clapet d'étranglement (1) est commandé sur la base d'un troisième paramètre $P3$ qui indique si l'embrayage (40) est activé ou non, de sorte que seulement si le troisième paramètre $P3$ indique que l'embrayage (40) est activé et non pas dans sa position fermée, le clapet d'étranglement (1) est commandé sur la base d'un premier paramètre $P1$ qui représente un changement par unité de temps d'une vitesse $\omega$ du moteur (10), dans lequel le clapet d'étranglement (1) est adapté pour adopter une pluralité de positions entre un premier état extrême et un second état extrême, de sorte que

- le premier état extrême est une position complètement ouverte ayant pour résultat un flux d'air maximum dans le tuyau (2), et
- le second état extrême est une position complètement fermée ayant pour résultat un flux d'air minimum dans le tuyau (2), dans lequel le clapet d'étranglement (1) est amené à tourner vers le premier état extrême à une cadence de déplacement maximum $v_{max}$ si le premier paramètre $P1$ adopte une valeur supérieure à la valeur limite T, laquelle cadence maximum $v_{max}$ est une cadence la plus élevée à laquelle le clapet d'étranglement (1) peut atteindre ladite pluralité de positions.

2. Procédé selon la revendication 1, dans lequel le flux d'air est un flux de gaz et le tuyau (2) est soit un tuyau d'admission d'air soit un tuyau d'échappement soit un tuyau RGE pour le moteur (10).

3. Procédé selon la revendication 2, dans lequel le moteur (10) est un moteur diesel (10).

4. Procédé selon l'une quelconque des revendications précédentes, dans lequel le clapet d'étranglement (1) est en outre commandé sur la base d'un deuxième paramètre $P2$ qui est une vitesse actuelle $\omega$ du moteur (10).

5. Procédé selon l'une quelconque des revendications précédentes, dans lequel le clapet d'étranglement (1) est en outre commandé sur la base d'un quatrième paramètre $P4$ qui est un changement par unité de temps du premier paramètre $P1$.

6. Procédé selon l'une quelconque des revendications précédentes, dans lequel le clapet d'étranglement (1) est en outre commandé sur la base d'un certain autre paramètre $Pn$ tel qu'un changement de couple requis ou un changement de position d'une pédale d'accélérateur.

7. Procédé selon l'une quelconque des revendications précédentes, dans lequel la valeur limite $T$ se situe dans la plage (100-1000)$2\pi/60$ $rad/s^2$.

8. Procédé selon l'une quelconque des revendications précédentes, dans lequel le clapet d'étranglement (1) est adapté pour atteindre ladite pluralité de positions à une cadence de déplacement $v$ variable.

9. Programme d'ordinateur qui comprend un code de programme et qui, lorsque ledit code de programme est exécuté dans un ordinateur, amène ledit ordinateur à appliquer le procédé selon l'une quelconque des revendications 1 à 8.

10. Produit de programme d'ordinateur comprenant un support lisible par ordinateur qui contient un programme d'ordinateur selon la revendication 9.

11. Système comprenant au moins un clapet d'étranglement (1) pour réguler un flux dans un tuyau (2) relié à un moteur (10), lequel clapet d'étranglement est adapté pour adopter une pluralité de positions différentes dans le tuyau (2), régulant ainsi un flux d'air à travers le tuyau, dans lequel le moteur (10) est également relié à un embrayage (40), et au moins une unité de commande (110) qui est adaptée pour commander le clapet d'étranglement (1), **caractérisé en ce que** le système est adapté pour commander le clapet d'étranglement (1) sur la base d'un troisième paramètre $P3$ qui indique si l'embrayage (40) est activé ou non, de sorte que seulement si le troisième paramètre *P3* indique que l'embrayage (40) est activé et non pas dans sa position fermée, le système est adapté pour commander le clapet d'étranglement (1) sur la base d'un premier paramètre *P1* qui est un changement par unité de temps d'une vitesse $\omega$ du moteur (10), dans lequel le clapet d'étranglement (1) est adapté pour adopter une pluralité de positions entre un premier état extrême et un second état extrême, de sorte que

- le premier état extrême est une position complètement ouverte ayant pour résultat un flux d'air maximum dans le tuyau (2), et
- le second état extrême est une position complètement fermée ayant pour résultat un flux d'air minimum dans le tuyau (2), dans lequel le clapet d'étranglement (1) est amené à tourner vers le premier état extrême à une cadence de déplacement maximum $v_{max}$ si le premier paramètre *P1* adopte une valeur supérieure à la valeur limite T, laquelle cadence maximum $v_{max}$ est une cadence la plus élevée à laquelle le clapet d'étranglement (1) peut atteindre ladite pluralité de positions.

12. Véhicule à moteur, par exemple une voiture, un camion ou un bus, muni d'au moins un système selon la revendication 11.

EGR cooler (202)

EGR damper(1)

Turbo
turbine (203)

Throttle
damper
(1)

$u_{eb}$

Turbocompressor(200)

DPF
(204)

SCR
(205)

Exhaust
damper (1)

Charge air
cooler (201)

Engine (10)

Fig. 1

Control signal (210) from
Control unit (110)

Control means (211)

Air flow

Throttle damper (1)

Inlet pipe (2)

Manifold (2) for inlet air to engine (10)

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0206790 A2
- US 4640243 A
- JP 2004183513 A
- EP 1043487 A2